Europäisches Patentamt

European Patent Office

Office européen des brevets

(11) Publication number: **0 424 173 A2**

# EUROPEAN PATENT APPLICATION

(21) Application number: 90311511.1

(22) Date of filing: 19.10.90

(51) Int. Cl.5: **B44C 1/10**, B44C 3/02, B44F 1/04

(30) Priority: 20.10.89 US 424385

(43) Date of publication of application:
24.04.91 Bulletin 91/17

(84) Designated Contracting States:
DE ES FR GB IT

(71) Applicant: MINNESOTA MINING AND
MANUFACTURING COMPANY
3M Center, P.O. Box 33427
St. Paul, Minnesota 55133-3427(US)

(72) Inventor: Morris, Terry L., c/o Minnesota
Mining and

Manufacturing Company, 2501 Hudson Road
P.O. Box 33427 St. Paul Minnesota 55133(US)
Inventor: Marlette, Patricia L., c/o Minnesota
Mining and
Manufacturing Company, 2501 Hudson Road
P.O. Box 33427 St. Paul Minnesota 55133(US)
Inventor: Janssen, Jeffrey R., c/o Minnesota
Mining and
Manufacturing Company, 2501 Hudson Road
P.O. Box 33427 St. Paul Minnesota 55133(US)

(74) Representative: Baillie, Iain Cameron et al
c/o Ladas & Parry Isartorplatz 5
W-8000 München 2(DE)

(54) Decorative composites and methods for making same.

(57) Decorative composites comprising a structural layer, a stabilizing layer, and a metal layer having a desired appearance which exhibits high heat stability and in some embodiments is extensible and flexible. The metal layer may be substantially coextensive with the structural layer or may be independently configured therefrom such that the structural layer has non-metal-backed segments. Also methods for making such composites.

Fig. 1

# DECORATIVE COMPOSITES AND METHODS FOR MAKING SAME

## Field of Invention

The present invention relates to decorative reflective composites which have an aesthetically desirable appearance, and particularly relates to composites which substantially retain their original appearance even when subjected to thermal stress and/or when elongated and conformed to a substrate and methods for making such composites.

## Background

Films or composites which can be adhered to substrates to protect same or impart a desired decorative appearance thereto have been made in many forms. For instance, in some forms, such composites have been intended to provide a specularly reflective appearance to the substrate.

U.S. Patent No. 3,152,950 (Palmquist et al.) discloses protective reflective films consisting of a composite of an oriented polyester or analogous film, a vapor-coated layer of aluminum or gold, and a layer of adhesive.

U.S. Patent No. 4,431,711 (Eisfeller) discloses decorative plastic object consisting of "islands" of indium top coated with a clear resinous layer which encapsulates and insulates the islands from one another. It is expected that such articles would be expensive to make.

Previously known composites of which we are aware were not capable of providing a high degree of opacity or "hiding power" while substantially retaining their appearance and opacity when elongated, such as when they are conformed to the contours of a substrate having a complex surface, i.e., a surface having convex and concave portions. Even those previously known composites which are substantially opaque in an unelongated form tend to suffer a reduction of opacity and/or an impairment of appearance when elongated.

## Other References

U.S. Patent No. 4,686,141 (Burns et al.) discloses a pellicular laminate for shielding structures from electromagnetic radiation comprising a web of polypropylene, a layer of polyurethane on at least one surface thereof, a layer of ductile metal sputtered onto the side of the polyurethane layer opposite the polypropylene, and a layer of adhesive on the opposite side of the metal layer. If stretched, such laminates would tend to be subject to microcracking of the metal layer, thereby tending to suffer reduced specularity and impaired aesthetic appearance.

## Summary of Invention

The present invention provides novel composites which may be made to exhibit desired appearance and which surprisingly will substantially retain their original desired appearance when subjected to thermal stress, i.e., composites of the invention are considered heat-resistant in that they can be heated to temperatures of up to about 250°F (120°C) or more while substantially retaining their original appearance. In many embodiments, composites of the invention will surprisingly substantially retain their desirable appearance even when stretched or elongated, i.e., they are extensible. The composites provided herein may be made in embodiments which have a specularly reflective appearance, or a brushed metal appearance, or with some other desired appearance, thus giving them great utility for decorative purposes. The subject composites are typically adapted to be bonded to a substrate and are also typically highly conformable, permitting them to be applied to even substrates having compound surfaces to impart a desired decorative finish thereto. The present invention also provides novel methods for forming such composites.

In brief summary, the novel, unobvious decorative composites of the invention comprise:

a) a self-supporting, substantially transparent structural layer;

b) a substantially transparent stabilizing layer disposed on the rear side of the structural layer, the stabilizing layer comprising a radiation-cured, substantially thermoset material; and

c) a metal layer having desired appearance disposed on the rear side of the stabilizing layer. Typically, a composite of the invention has a retentive extensibility of at least about 10 percent, i.e., it will substantially retain its appearance when elongated to that extent. In many embodiments, composites of the invention will further comprise a layer of adhesive on the rear side of the metal layer by which the composite can be bonded to a desired substrate.

In brief summary, the method for making the novel, unobvious composites of the present invention comprises:

a) providing a fabricating carrier having a fabricating surface that exhibits a desired finish;

b) applying a metal layer to the fabricating surface of the carrier such that the appearance of the front surface of the metal layer is defined by the finish of the fabricating surface;

c) applying (e.g., by coating a curable composition and curing same in situ) a substantially transparent stabilizing layer to the exposed, i.e., front, side of the metal layer, the stabilizing layer comprising a radiation-cured, substantially thermoset material;

d) applying (e.g., by coating a curable composition and curing same in situ) a substantially transparent extensible self-supporting structural layer to the exposed side, i.e., front, of the stabilizing layer; and

e) typically removing the fabricating carrier from the metal layer, thereby exposing the rear side thereof. Typically, a layer of adhesive, and in some instances a layer of adhesive and a protective liner covering same, will be applied to the rear side of the metal layer soon after the fabricating carrier is removed. The adhesive can be used to bond the composite to the surface of a substrate as desired.

The novel composites of the invention can be made in forms which are strong and tough as well as resistant to degradation by exposure to water, organic solvents, sunlight, and abrasion. Typically, the composites provided herein exhibit high heat stability so that even when repeatedly heated and cooled, such as when applied to the exterior of automobiles which are periodically exposed to bright sunshine, the composites substantially retain their original aesthetically desirable appearance. In many embodiments, the composites provided herein are substantially opaque so as to provide great "hiding power" when applied to a substrate, e.g., having sufficient opacity to exhibit a transmittance of less than about 1.0 percent, and in some instances less than about 0.1 percent. Composites of the invention may be made in embodiments wherein the metal layer is substantially continuous and coextensive with the total extent of the composite or may be in a special pattern such that with the underlying substrate shows through to provide special effects and appearance.

Brief Description of Drawing

The invention will be further explained with reference to the drawing, wherein:

Figure 1 is a cross-sectional view of an illustrative embodiment of a composite of the invention;

Figure 2 is a plan view of another illustrative embodiment of a composite of the invention applied to a substrate;

Figure 3 is a cross-sectional view of the composite illustrated in Figure 2 along axis 3-3; and

Figure 4 is a cross-sectional view of some elements of an illustrative embodiment of a composite of the invention during fabrication thereof.

These figures, which are idealized, are not to scale and are intended to be merely illustrative and non limiting.

Detailed Description of Illustrative Embodiments of the Invention

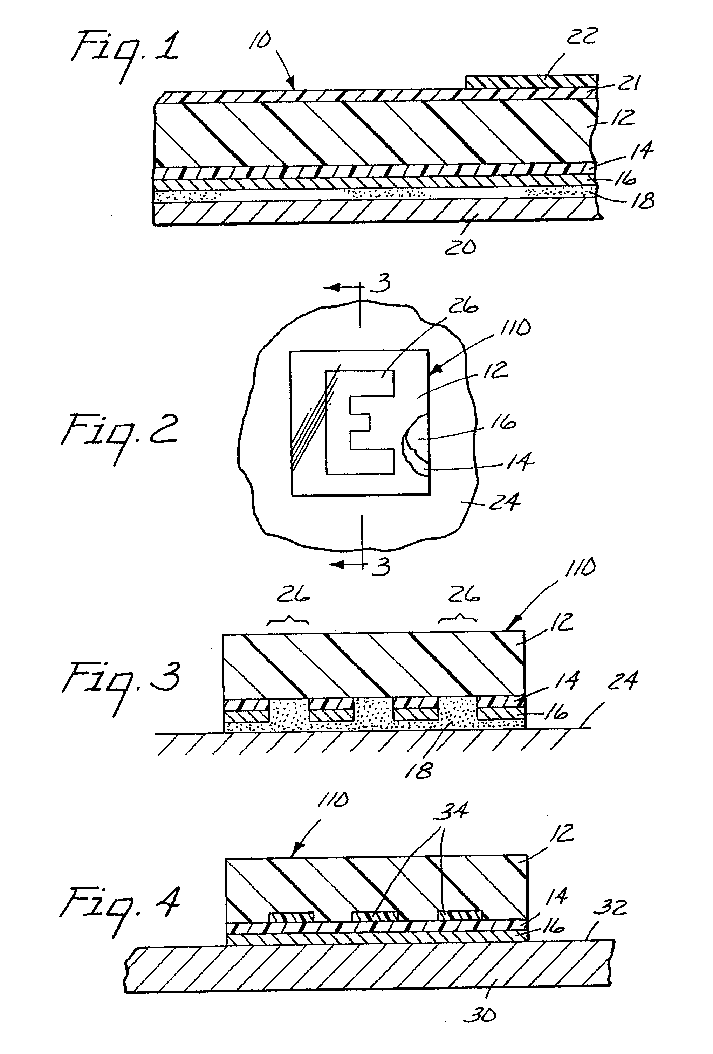

A typical embodiment of a composite of the invention is shown in Figure 1, wherein composite 10 comprises structural layer 12, stabilizing layer 14 on the rear side thereof, and metal layer 16 on the opposite side, i.e., the rear side, of stabilizing layer 14. Typically, on the back side of metal layer 16, composite 10 further comprises optional adhesive layer 18 protected by optional removable liner 20. In some instances, composite 10 will further comprise optional prime layer 21 on at least a portion of the front side of structural layer 12 to facilitate the application of colored coatings 22 such as inks or paints to the surface of composite 10.

In use (not shown), after composite 10 is applied to a substrate (not shown) structural layer 12 is the exposed portion of composite 10 and protects the other elements of composite 10. Accordingly, it should exhibit the proper properties to retain its desired appearance when subjected to the anticipated conditions of use. For instance, it is typically preferred that structural layer 12 be water-resistant and abrasion-resistant. Resistance to exposure to solvents and sunshine as well as impact by gravel is typically desired in the case of composites which are intended for application to the exterior of automobiles. Typically, it will be preferred that the front surface of structural layer 12 be resistant to staining and that materials such as grease and dirt not stick thereto. However, as is discussed in more detail below, in some instances, it is desirable that structural layer 12 be such that inks and or paints stick thereto, either inherently or with the use of a prime layer.

Structural layer 12 is self-supporting and typically substantially defines the overall strength and handling properties of composite 10.

It is typically preferred that structural layer 12 be substantially thermoset in character. By thermoset it is meant that the structural layer will tend to retain its then current shape and volume even when subjected to the temperatures to which the article is likely to be exposed. Structural layer 12 should, however, not be so brittle as to crack when composite 10 is conformed to desired configuration, e.g., the complex surface of a substrate, and it should be elongatable.

One class of materials which is typically useful in the structural layers of composites of the invention are polyurethanes, e.g., the reaction products of one or more polyols and one or more isocyanates. Layers of such materials are typically very durable and solvent resistant. Also, isocyanate-based materials typically achieve strong adhesion to metals. Typically, one or both of the polyol and isocyanate is solvent based as compositions containing same tend to achieve better penetration through the stabilizing layer and thus bond more strongly to the metal layer.

Illustrative examples of classes polyols which are typically useful herein include polyesters, acrylics, polyethers, caprolactones, and blends thereof. Both aliphatic and aromatic polyols may be used in the structural layers of composites of the invention, however, those made with aliphatic polyols typically tend to withstand exposure to outdoors better than those made with aromatic polyols which may tend to turn yellow. Accordingly, aliphatic polyols are typically preferred for such applications. Polyester and acrylic polyols typically tend to exhibit greater durability, especially in outdoor applications than do polyether polyols. Accordingly, polyester and acrylic polyols, and blends thereof tend to be preferred for such applications, e.g., or automotive body decoration.

Illustrative examples of classes of isocyanates which are typically useful herein include polymeric derivatives of hexamethylene diisocyanate ("HDI"), 4,4-methylenebis (phenyl isocyanate) ("MDI"), hydrogenated 4,4-methylenebis (phenyl isocyanate), toluene diisocyanate ("TDI"), and isophonone diisocyanate ("IPDI"). Both aliphatic and aromatic isocyanates may be used in the structural layers of composites of the invention, however, those made with aliphatic isocyanates typically tend to withstand exposure to outdoors better than those made with aromatic isocyanates which may tend to turn yellow with age and exposure. Accordingly, aliphatic isocyanates are typically preferred for such applications.

Compositions based upon polyester, acrylic, and caprolactone polyols and aliphatic isocyanates such as HDI and IPDI are typically preferred because they typically tend to exhibit excellent exterior durability.

The optimum formulation for structural layer 12 is determined in part by the properties required of the resultant composite for the desired application. For instance, structural layer 12 may comprise a urethane composition which exhibits a high degree of flexibility and extensibility if the composite is to be conformed to a surface having a substantial number of sharply defined concave and convex surface features. In other illustrative embodiments, it may be desired that structural layer 12 exhibit very high flexibility under cold conditions or that it be resistant to degradation by gasoline.

If desired, the structural layer composition may also comprise other agents such as ultraviolet radiation absorbers, stabilizers, and antioxidants to improve the durability and weatherability thereof. In many embodiments, the structural layer will be substantially transparent and colorless. However, if desired to achieve special appearance, composites of the invention may be made wherein the structural layer comprises one or more colorants, e.g., pigments or dyes, preferably light stable. Typically, it is preferred that such colorants be substantially transparent. It will be understood that certain formulations for the structural layer may inherently exhibit desired coloration without addition of colorants. For instance, formulations which contain substantial portions of 4,4-methylenebis (phenyl isocyanate) typically tend to exhibit quite dark, but transparent coloration.

Structural layer 12 may typically be between about 25 to about 100 microns (about 1 to about 4 mils) in thickness for applications where high conformability is desired. Composites made with structural layers which are substantially thinner than the indicated range may not exhibit sufficient durability and toughness, particularly when elongated substantially. Composites made with structural layers which are substantially thicker, i.e., greater than about 100 microns, than the indicated range may tend to be somewhat less conformable. However, thicker structural layers may be useful in applications where the composite may be subject to impact, e.g., if used as a covering on the bumper or fender of an automobile where it is subject to being struck by gravel. It will be understood that composites of the invention may be made with structural layers having thicknesses outside the indicated range. It will also be understood that the structural layer may tend to attenuate when the resultant composite is elongated; accordingly, its initial thickness should be sufficient that the structural layer will remain substantially continuous and intact after being elongated to the degree anticipated.

Stabilizing layer 14, disposed on the rear side of structural layer 12 between structural layer 12 and metal layer 16, is typically made up of a radiation-curable, substantially thermoset material. For instance, it can be formed from a composition comprising a mixture of a urethane/acrylate oligomer, acrylate monomers (as reactive diluents), photoinitiator for ultraviolet cure, and optionally antioxidants to enhance exterior durability.

Surprisingly, we have found that stabilizing layers 14 as taught herein enable composites of the invention to be elongated while substantially retaining their original appearance. For instance, composites of the invention may be made with specularly reflective metal layers which can be elongated up to at least about 10 percent, typically at least about 35 percent, and, in some instances, up to at least about 25 percent and still exhibit a specularly reflective appearance. This property is referred to herein as "retentive extensibility", by which it is meant that the composite can be elongated, i.e., is extensible, while substantially retaining its appearance.

It has also surprisingly been observed that composites made with stabilizing layers as taught herein exhibit superior heat-resistance, particularly in comparison to otherwise identical composites which are made without such a stabilizing layer. For instance, composites of the invention will substantially retain their original appearance even when heated to high temperature, e.g., about 175°F (80°C) or more, for several days, or when heated to very high temperatures, e.g., 275°F (135°C) for an hour or more. Composites made without such stabilizing layers will rapidly degrade and become substantially less bright when so heated. When viewed microscopically, e.g., at magnifications of about 60 to about 100 times, the metal layers of composites of the invention which have been so heated appear to have suffered no ill effect due to heating whereas the metal layers of those composites not having stabilizing layers are seen to have undergone a substantial degree of cracking, referred to herein as "microcracking".

The dynamic mechanical properties of stabilizing layer 14 are important to achieving the purposes of this invention. Stabilizing layer 14 should have a glassy modulus of about $3.0 \times 10^9$ Pascals or more at 0°C, and preferably about $6.0 \times 10^9$ Pascals or more at 0°C. Stabilizing layer 14 preferably has rubbery modulus of about $3.5 \times 10^8$ or more Pascals at 110°C. Preferably, stabilizing layer 14 has a transition width of at least about 20°C. For instance, one radiation-curable urethane acrylate which has been found to be useful herein has a glassy modulus of about $3.02 \times 10^9$ Pascals at 0°C, a rubbery modulus of about $3.54 \times 10^8$ Pascals at 110°C, a transition width of about 22°C, and a $T_g$ of about 50°C. A related, but more preferred composition which comprises a multifunctional crosslinker has a glassy modulus of about $6.45 \times 10^9$ Pascals at 0°C, a rubbery modulus of about $3.98 \times 10^8$ Pascals at 110°C, a transition width of about 25°C, and a $T_g$ of about 52°C.

Typically, stabilizing layer 14 is between about 5 and 10 percent as thick as the thickness of structural layer 12. In typical embodiments of the invention, this will mean that stabilizing layer 14 is between about 2.5 and about 10 microns (about 0.1 to about 0.4 mils) thick. Stabilizing layers which are substantially thinner than this range may not provide the desired heat stability to the composite. It has been observed that composites wherein the stabilizing layer is made substantially thicker than the indicated range may suffer delamination with the structural layer tending to separate from the other elements of the composite. While we do not wish to be bound by this theory, it is believed that during fabrication of the composite the structural layer composition tends to penetrate through the stabilizing layer to achieve contact with the metal layer, and if the stabilizing layer is too thick, suitable penetration and adhesion are not achieved. The optimum thickness of stabilizing layer 14 for a particular application may be readily determined by trial and error. Stabilizing layer 14 is preferably substantially transparent.

Specularly metal layer 16 is disposed on the rear side of stabilizing layer 14 and imparts the desired appearance to the composite. Accordingly, the front side of metal layer 16 is preferably very smooth, i.e., having a mirror finish, in embodiments wherein it is desired that the composite provide a specular reflective appearance. Other illustrative embodiments may include brushed metal finishes or so-called optically shaped structures such as those disclosed in U.S. Patent No. 4,520,053.

Metal layer 16 typically comprises a reflective, ductile metal. In some embodiments, it will essentially consist of a layer of one or more of the following: aluminum, nickel, chrome, gold, silver, or tin. Typically, metal layer 16 preferably consists essentially of tin, as such layers provide an excellent combination of high brightness, high reflectivity in reflective embodiments, cost effectiveness, and high corrosion resistance. Due to the relatively high ductility of tin, composites made with such metal layers typically tend to be more extensible than do those made with metal layers of differing composition.

Metal layer 16 may be formed in a number ways. Illustrative examples of ways that a layer of metal may be deposited include sputtering, chemical deposition, or vacuum vapor coating. Vacuum vapor coating is typically preferred as highly reflective, uniform coatings can be consistently achieved thereby.

Typically, it is preferred that the composite be sufficiently opaque to hide or cover the color of the underlying substrate to which the composite is to be applied. Accordingly, metal layer 16 should be sufficiently thick to provide such cover. This may be expressed in terms of transmittance of the composite, with unelongated composites having a transmittance of less than about 1.0 percent typically being preferred and those having a transmittance of less than about 0.1 percent being more preferred. It will be understood that the transmittance of a composite may tend to increase when the composite is elongated. Suitable thickness of the metal layer of a composite of the invention may be readily determined by trail and error. In the case of tin metal layers, it has been observed that a layer of tin which yields a resistance of about 1.5 ohms/square (e.g., 1.5 ohms/meter$^2$) will typically provide sufficient hiding power for many applications.

In many embodiments, structural layer 12, stabilizing layer 14, and metal layer 16 will be substantially coextensive. Typically, those members will also be substantially continuous within the overall shape of the composite.

In some embodiments, however, metal layer 16 and structural layer 12 will not be coextensive, as is illustrated in Figures 2 and 3. In the Figures, composite 110 has been bonded to the surface of substrate 24 with adhesive 18. As shown there, metal layer 16 is independently configured. As used herein, "independently configured" means that metal layer 16 does not underlie substantially the entirety of structural layer 12 as it would if the members were coextensive. Figure 2 illustrates the appearance of one such embodiment wherein composite 110 has the appearance of a block letter E surrounded by an area having the appearance of metal layer 16. A cross-sectional view of that composite is illustrated in Figure 3. If adhesive 18 is substantially transparent, then when viewed from the perspective of Figure 2, the block E would have an appearance defined in part by surface of the substrate to which composite 110 had been applied. The portions of structural layer 12 which metal layer 16 is not coextensive with are referred to herein as non-metal-backed segments 26.

As shown in Figure 1, optional adhesive layer 18 is typically disposed on the rear side of metal layer 16. Adhesive layer 18 provides means for bonding composite 10 to a desired substrate (not shown). Accordingly, the composition and properties of adhesive layer 18 are determined in part by the characteristics of metal layer 16, the desired substrate, conditions under which composite 10 is to be applied, and the conditions to which composite 10 and the substrate are likely to be subjected to after application of composite 10. Depending upon the particular characteristics of metal layer 16 and adhesive layer 18, it may be useful to employ such surface treatments as exposure to corona treatment or plasma discharge, or to apply a separate priming layer (not shown), to improve the adhesion between metal layer 16 and adhesive 18.

Illustrative examples of some of the types of adhesive which may be used in composites of the invention include heat activated adhesives and pressure-sensitive adhesives. Other illustrative examples of suitable adhesives include chemically activated adhesives, for instance, those which are activated by action of an agent contained on or within the surface of the substrate to which the composite is to be applied. As will be understood, the adhesive preferably does not contain any agents or functional moieties which would tend to degrade, e.g., corrode, the metal layer.

Adhesive layer 18 may be preformed and then laminated to the rear side of metal layer 16 or it may be formed directly on metal layer 18. If adhesive layer 18 is formed from a solvent-based composition, it is preferably preformed and dried sufficiently metal layer 16 and the other elements of composite 10 are not degraded thereby.

Adhesive layer 18 covers at least a portion of the rear side of metal layer 16, and typically is substantially coextensive with composite 10 to provide a secure bond to the desired substrate. In instances where metal layer 16 is independently configured and is not coextensive with structural layer 12, as shown in Figures 2 and 3, adhesive 18 typically is coextensive with structural layer 12 and, typically, at least those portions of adhesive layer 18 which underlie non-metal-backed segments 26, are preferably substantially transparent such that the surface of the substrate is visible therethrough.

Adhesive layer 18 may be substantially colorless, or may be made of desired color, e.g., by inclusion of colorants such as dyes or pigments therein, to increase the opacity of composite 10, or to provide a specialized appearance with patterned metal layer 16. Also, adhesive layer 18 may be colored to have a different appearance than that of structural layer 12 to facilitate handling of composite 10.

Typically adhesive layer 18 will be covered by protective liner 20. Liner 20 may be desirable so as to prevent marring or contamination of adhesive layer 18 or to prevent blocking thereof if the composite is wound into a roll such as for more convenient storage or transportation. Typically, it is preferred that liner 20 be very smooth and that adhesive layer 18 also be of very smooth and fine consistency, because any surface features thereof may be imparted to metal layer 16, thus spoiling the desired appearance thereof. Selection of liner 20 will be based in part upon the characteristics of adhesive layer 18. Illustrative examples of materials which are often useful include polymeric films, e.g., polyester, and paper.

As mentioned above, the method for making the novel decorative composites of the invention comprises, in brief summary:

a) providing a fabricating carrier having a fabricating surface that exhibits a desired finish;

b) applying a metal layer to the fabricating surface such that the appearance of the front surface of the metal layer is defined by the finish of the fabricating surface;

c) applying a stabilizing layer to the front side of the metal layer;

d) applying a substantially transparent extensible self-supporting structural layer to the exposed side of the stabilizing layer; and

e) optionally removing the fabricating carrier from the metal layer, exposing the rear side thereof. Typically, a layer of adhesive would then be applied to the exposed surface, i.e., the rear side, of the metal layer.

Referring to Figure 4, fabricating carrier 30 should possess sufficient strength and stability under anticipated physical conditions, e.g., temperature, pressures, and tensile stress, to remain substantially dimensionally stable during the process of fabricating composites of the invention. Typically, carrier 30 is flexible to permit it to be handled in roll form, however, substantially rigid carriers may be used.

Fabricating surface 32 of carrier 30 should possess features in accordance with the desired appearance of metal layer 16 to be formed thereon. For instance, if composite 10 is to have a specularly reflecting appearance, then fabricating surface 32 should be very smooth, having a "mirror finish" such that metal layer 16 will attain a very smooth front surface. Illustrative examples of some other finishes which may be useful include brushed or grooved patterns, e.g., "engine turns", matte surfaces, and relief or embossed appearances. If desired, fabricating surface 32 may be made up of portions having one or more different finishes, e.g., mirror finish portions in arrangement with matte portions.

Fabricating surface 32 and carrier 30 should possess appropriate properties that metal layer 16 can be subsequently removed therefrom without damage. In some instances, the material of which carrier 30 is made will inherently possess desired release characteristics. In other cases (not shown), however, fabricating surface 32 will have to be treated, with application of release agent(s), to provide the necessary release properties. Care should be taken with such treatments to ensure that they do not themselves somehow impair metal layer 16 and its desired appearance. For instance, some common release agents contain fine particles, e.g., of silicone dioxide, which may be large enough to interfere with desired smoothness of metal layer 16.

Illustrative examples of material typically useful as a fabricating carrier herein include films of photographic quality polyester, e.g., 3 to 5 mils (75 to 125 microns) thick, and polyester-coated papers. It will be understood by those skilled in the art that other carriers may be employed.

Metal layer 16 can typically be formed on fabricating surface 32 by any of many techniques, such as chemical deposition, sputtering, and vacuum vapor deposition. Vacuum vapor deposition is typically preferred, particularly for embodiments wherein it is desired that the composite have a highly specularly reflective appearance, as very smooth, highly reflective layers may be achieved therewith.

Following formation of metal layer 16 with desired appearance, a radiation-curable composition is applied, e.g., by gravure printing or one or more coating techniques, to the front side of metal layer 16 and substantially cured to form stabilizing layer 14 as described above. As will be understood, sufficient time should be provided to enable the composition to flow and substantially completely and preferably uniformly cover the front side of metal layer 16. The process conditions under which curing of the stabilizing layer is conducted will depend in part upon the characteristics of the particular composition and may include use of one or more of the following: inert atmosphere, e.g., nitrogen, elevated temperature, and/or exposure to actinic radiation, e.g., ultraviolet radiation. Preferably, stabilizing layer 14 is preferably substantially completely cured prior to application of the precursor composition for structural layer 12 thereto. It has been observed that, if stabilizing layer 14 is not substantially completely cured prior to that application, the resultant composite may tend to provide a lesser degree of heat resistance and retentive extensibility than if stabilizing layer 14 is so cured.

A composition is then applied, e.g., by gravure printing or one or more coating techniques, to the front side of resultant stabilizing layer 14 and cured to yield structural layer 12 as described above. As will be understood, sufficient time should be provided to enable the composition to flow and substantially completely and preferably uniformly cover the front side of stabilizing layer 14. The process conditions under which curing of the structural layer is conducted will depend in part upon the characteristics of the particular composition and may include use of one or more of the following: inert atmosphere, e.g., nitrogen, elevated temperature, and/or exposure to actinic radiation, e.g., ultraviolet radiation.

Following formation of structural layer 12, carrier 30 is optionally removed and optional adhesive layer 18 and optional liner 20 may be applied as described above.

In embodiments wherein it is desired that metal layer 16 be independently configured, i.e., that it not be coextensive with structural layer 12, as shown in Figures 2 and 3, following formation of metal layer 16 and application of stabilizing layer 14, a mask may be applied to the front side of stabilizing layer 14 in imagewise fashion. Referring again to Figure 4, mask composition 34 is applied to stabilizing layer 14 in desired pattern. Following formation of structural layer 12, when composite 10 is removed from carrier 30, mask 34 serves to cause interlayer delamination between structural layer 12 and the portions of stabilizing layer 14 to which mask 34 was applied. Selection of useful mask materials will depend in part upon the characteristics of the particular structural layer and stabilizing layer formulations being used as well as the nature of the pattern which is desired, e.g., whether it requires application in high resolution, finely detailed manner. Acrylic- and silicone-based materials are illustrative examples of some classes of materials which may be used as mask materials herein.

Adhesive (not shown) can then be applied to the back side of the portions of metal layer 16 which are part of the composite and to the exposed portions of structural layer 12. As mentioned above, it may be desired that those portions of adhesive which underlie the non-metal-backed segments of structural layer 12 be substantially transparent such that the substrate is visible therethrough. In such embodiments, it may be desired for the adhesive to be substantially colorless or tinted. In other embodiments, the adhesive may be pigmented to be substantially opaque to provide a contrast in appearance between the portions of the adhesive which are visible through non-metal-backed segments 26 of structural layer 12 and metal layer 16.

As shown in Figure 1, prime material 21 may be applied to at least a portion of the front surface of structural layer 12 to improve the adhesion of desired imaging agents such as inks or paints thereto. Prime material 21 is selected to be compatible with both the particular structural layer 12 and imaging agent 22 and may be selected in accordanoe with known principles. For example, prime materials containing hydroxyl-terminated resins, e.g., hydroxy ethyl acrylate and VAGH Resin, a vinyl chloride/vinyl acetate copolymer having about 2 percent hydroxyl functionality available from Union Carbide Company are often useful herein. Typically vinyl-based such resins are employed with vinyl-based imaging agents and polyester-based such resins are employed with polyester-based imaging agents.

In another embodiment, one or more imaging agents can be applied in imagewise fashion to the front side of the metal layer prior to application of the stabilizing and structural layers.

Examples

The invention will be further explained by the following illustrative examples which are intended to be nonlimiting. Unless otherwise indicated, all amounts are expressed in parts by weight.

Unless otherwise indicated, the following test methods were used.

Corrosion Resistance

The Corrosion Resistance of a composite were evaluated by applying a sample of the subject composite to a test panel and then immersing the sample in a 10 percent by weight aqueous solution of sodium hydroxide (NaOH) for about 1 hour. Following removal of the sample from the solution and rinsing with running water, the sample was visually examined for any change in appearance.

Heat Aging

The Heat Aging properties of a composite were evaluated by applying a sample of the subject composite to a test panel and then placing the sample in an oven at a temperature of about 175° F (80° C) for about 7 days. Following removal from the oven, the sample was permitted to cool to room temperature whereupon it was visually examined to for any change in appearance.

High Temperature Resistance

High Temperature Resistance of the a composite was evaluated by applying a sample of the subject composite to a test panel and then placing the sample in an oven at a temperature of about 250°F (120°C) for about 1 hour. Following removal from the oven, the sample was permitted to cool to room temperature whereupon it was visually examined to for any change in appearance.

Retentive Extensibility

Samples of the composites being tested were cut into strips about 1 inch (2.5 centimeters) in width and applied to steel coupons which were substantially planar with concave depressions in thereon by laying the sample across the coupon spanning the depression and then applying hand pressure to the sample to cause it to elongate as necessary to conform to the surface of the depression. The depressions corresponded to elongations of 5, 10, 15, and 25 percent, respectively. The samples were then examined to determine if the appearance thereof had been appreciably diminished.

Transmittance

Determined as a percentage of the light which passes through the sample with a MacBeth TD501 Densitometer.

Dynamic Mechanical Properties

Glassy Modulus, Rubbery Modulus, Transition Width, and $T_g$ were determined using a DuPont 983 Dynamic Mechanical Analyzer.

Example 1

Tin was applied via vacuum vapor coating to a thickness equivalent to a resistance of about 1.5 ohms/square to the fabricating surface of a 4 mil (100 micron) thick polyester fabricating carrier. The fabricating surface had a mirror finish.

A stabilizing layer was formed on the front side of the tin vapor coat by gravure printing a layer of the following radiation curable composition:

| Amount | Component |
|---|---|
| 63.3 | XP173-09 - an aliphatic urethane acrylate oligomer diluted with 25 weight percent 2-ethylhexylacrylate, from Cargil, Inc.; |
| 1.1 | Zinc naphthenate - flow agent comprising $Zn(C_6H_5COO)_2$, containing 10 percent Zn metal, from Ferro Corporation; |
| 5.7 | Diethoxy acetophenone - photoinitiator; |
| 10.7 | N-vinyl pyrolidone - reactive diluent, to improve adhesion to vinyl; |
| 6.7 | 2-ethyl hexylacrylate - monomer; |
| 11.6 | Tetraethylene glycol diacrylate - monomer; |
| 0.9 | TINUVIN 770 - hindered amine stabilizer, from Ciba-Geigy, Inc.; |

with a 150 line/inch (60 line/centimeter) plate. After sitting for about 1 minute to permit the curable

9

composition to flow so as to cover the vapor coat substantially uniformly, the stabilizing layer was substantially completely cured with one pass through a PPG QC 1202 Ultraviolet Processor at a rate of about 50 feet/minute (15 meters/minute) with 2 lamps rated at 200 Watts/inch (80 Watts/centimeter) each in a nitrogen atmosphere (less than about 200 parts per million of oxygen [$O_2$]).

A two part urethane composition was then filmcoated onto the cured stabilizing layer at a wet thickness of about 5 mils (125 microns). Part A comprised the following:

| Amount | Component |
|---|---|
| 43.8 | DESMOPHEN 670-100 - flexible polyester polyol, 100% solids, equivalent weight of 487, % hydroxyl of 4.3, from Mobay Chemical Company; |
| 24.9 | DESMOPHEN 651A-65 - rigid polyester polyol, 65% solids in ethyl glycol acetate, equivalent wt. of 325, % hydroxyl of 5.2, from Mobay Chemical Inc.; |
| 4.8 | Methyl isobutyl ketone - solvent; |
| 20.2 | PM Acetate - propylene glycol methyl ether acetate, from Ashland Chemical company; |
| 2.5 | TINUVIN 292 - hindered amine stabilizer, from Ciba- Geigy, Inc.; |
| 2.4 | UVINUL N539 - ultraviolet absorber, BASF; |
| 1.4 | CAB 381 0.1. - flow agent, cellulose acetate butyrate resin from Eastman Chemical Company. |

Part B comprised 39.7 parts of DESMODUR N100, an aliphatic polyisocyanate (HDI), viscous liquid, 100 percent solids, equivalent wt. of 191, percent NCO of 22, from Mobay Chemical Company.

After filmcoating, the urethane composition was thermally cured to a non-blocking finish by heating in an oven at about 150° F (65° C) for about 5 minutes, about 250° F (120° C) for about 2.5 minutes, and at about 300° F (150° C) for about 3 minutes to yield the structural layer. The composite was then allowed to season for about two weeks at room temperature.

The fabricating carrier was then stripped from the composite and a layer of pressure-sensitive adhesive applied to the rear side of the metal layer.

The stabilizing layer of this composite was found to have a glassy modulus of about 3.02 X $10^9$ Pascals at 0° C, a rubbery modulus of about 3.54 X $10^8$ Pascals at 110° C, a transition width of about 22° C, and a $T_g$ of about 50° C.

The resultant composite was found to provide superior Corrosion Resistance; superior Heat Aging, suffering only very slight hazing (no microcracking was detected during inspection with a microscope at magnification of about 100X); superior High Temperature Resistance, suffering only very slight hazing; a Retentive Extensibility of at least about 25 percent; and a Transmittance of about 0.1 percent. Samples of the composite left at room temperature without being elongated or subjected to thermal testing had retained their original appearance even several weeks after being made.

Example 2

A decorative composite was made as in Example 1 except the stabilizing layer was formed from a composition comprising 95 parts of the stabilizing layer composition used in Example 1 and 5 parts of a multifunctional crosslinker, i.e., trimethylolpropane triacrylate.

The stabilizing layer of this composite was found to have a glassy modulus of about 6.45 X $10^9$ Pascals at 0° C, a rubbery modulus of about 3.98 X $10^8$ Pascals at 110° C, a transition width of about 25° C, and a $T_g$ of about 52° C.

The resultant composite provided similar results as that of Example J except Heat Aging and High Temperature Resistance were excellent with no change in appearance being discernible.

Example 3

A decorative composite was made as in Example 1 except that following curing of the structural layer a prime layer having a composition of 5 percent of VAGH Resin (a vinyl chloride/vinyl acetate copolymer having about 2 percent hydroxyl functionality from Union Carbide Company) in a solution comprising equal amounts of toluene, methyl ethyl ketone, and methyl isobutyl ketone was applied to the front side thereof and then imaging agents, SCOTCHCAL Brand Series 3900 and 7800 Vinyl Inks, from Minnesota Mining and Manufacturing Company, printed thereon in imagewise fashion.

The resultant composite provided similar results as that of Example 1.

## Example 4

A decorative composite was made as in Example 1, except after curing of the stabilizing layer, a mask material comprising 20 percent A-21 (polymethyl-methacrylate from Rohm and Haas, Company) in a solution comprising equal amounts of methyl isobutyl ketone, methyl ethyl ketone, and xylene was printed on portions of the front side thereof in imagewise fashion. The structural layer was then formed thereover as in Example 1. When the carrier was removed, the portions of the stabilizing layer and the metal layer over which mask material had been applied were substantially removed with the carrier, with the stabilizing layer and the metal layer splitting substantially along the boundaries of the mask material.

After a layer of transparent adhesive was applied, the composite was applied to a panel. The metal layer was in the form of an image corresponding to the pattern in which the mask material had been applied, with the substrate panel being visible through the non-metal-backed segments of the structural layer.

The resultant composite provided similar results as that of Example 1.

## Example 5

A decorative composite was made as in Example 4, except that the mask material comprised a silicone composition, Goldschmidt RC 149 ultraviolet curable silicone with 5 percent of Goldschmidt A-4 photo-initiator, and the mask was cured with one pass through a PPG QC 1202 Ultraviolet Processor at a rate of 100 feet/minute (30 meters/minute) with 2 lamps rated at 100 Watts/inch (40 Watts/centimeter) in a nitrogen atmosphere (less than about 200 parts per million of oxygen [$O_2$].

Similar results were obtained as in Example 4.

## Comparative Example A

A decorative composite was made as in Example 1 except the stabilizing layer was omitted.

The resultant composite was found to provide similar Corrosion Resistance as that of Example 1. However, the composite of Comparative Example A exhibited poor Heat Aging, quickly suffering substantial hazing (pronounced microcracking was detected during inspection with a microscope at about 100X); poor High Temperature Resistance, suffering substantial impairment of appearance within a matter of minutes; poor Retentive Extensibility, with the composite being observed to have discolored soon after being elongated; and a Transmittance of about 0.1 percent. Even samples of the composite left at room temperature without being elongated or thermally stressed were observed to suffer substantial hazing within a matter of several hours after having been made.

Various modifications and alterations of this invention will become apparent to those skilled in the art without departing from the scope and spirit of this invention.

## Claims

1. An extensible decorative composite film having two sides, one of said sides having a decorative appearance, characterized in that said composite comprises:

a) a self-supporting structural layer;

b) a stabilizing layer disposed on the rear side of said structural layer, said stabilizing layer comprising a radiation-cured, substantially thermoset material having a glassy modulus of about $3.0 \times 10^9$ or more Pascals at 0° C; and

c) a metal layer disposed on the rear side of said stabilizing layer, said metal layer having a desired appearance and being substantially coextensive with said structural layer, said metal layer comprising at least one of the following: aluminum, nickel, chrome, gold, silver, or tin.

2. The composite of claim 1 characterized in that said composite further comprises at least one of the following:

   a) a layer of adhesive on the rear side of said metal layer; or

   b) a removable carrier on the side of said metal layer opposite said stabilizing layer;

   c) a prime layer on at least a portion of the front surface of said structural layer; or

   d) an imaging agent covering at least a portion of the front surface of the structural layer; or

   e) one or more imaging agents in desired imagewise pattern between said metal layer and said stabilizing layer.

3. The composite of claim 1 further characterized in at least one of the following:

   a) said stabilizing layer comprises a urethane/acrylate oligomer; or

   b) said stabilizing layer contains one or more of the following modifying agents: colorant, flow agent, stabilizer, or antioxidant; or

   c) said stabilizing layer is between about 2.5 and about 10 microns thick; or

   d) said stabilizing layer is between about 5 and about 10 percent as thick as said structural layer; or

   e) said stabilizing layer has a glassy modulus of about $6.0 \times 10^9$ or more Pascals at $0°$ C; or

   f) said stabilizing layer has a rubbery modulus of about $3.5 \times 10^8$ or more Pascals at $110°$ C and a transition width of at least about $20°$ C.

4. The composite of claim 1 further characterized in at least one of the following:

   a) said structural layer comprises the reaction product of at least one of aliphatic polyols and aromatic polyols with at least one of aliphatic isocyanates and aromatic isocyanates; or

   b) said structural layer is between about 25 and about 100 microns thick; or

   c) said structural layer is more than about 100 microns thick; or

   d) said structural layer contains one or more of the following modifying agents: colorant, adhesion promoter, flow agent, stabilizer, or antioxidant.

5. The composite of claim 1 characterized in at least one of the following:

   a) said composite has a retentive extensibility of at least about 10 percent; or

   b) said composite has a retentive extensibility of at least about 15 percent; or

   c) said composite has a retentive extensibility of at least about 25 percent; or

   d) said composite has a transmittance of less than about 1.0 percent; or

   e) said composite has a transmittance of less than about 0.1 percent.

6. The composite of claim 1 further characterized in at least one of the following:

   a) said metal layer is independently configured and is not coextensive with said structural layer such that said structural layer comprises non-metal-backed segments; or

   b) said metal layer consists essentially of tin.

7. A method for making an extensible decorative composite of claim 1, characterized in that said method comprises:

   a) providing a fabricating carrier having a fabricating surface that exhibits a desired finish;

   b) releasably applying a metal layer to said fabricating surface of said carrier, said metal layer having a rear side which is in contact with said fabricating surface of said fabricating carrier and a front side which is exposed such that the appearance of said front surface of said metal layer is defined by said finish of said fabricating surface, said metal layer comprising at least one of the following: aluminum, nickel, chrome, gold, silver, or tin;

   c) applying an stabilizing layer to the front side of said metal layer, said stabilizing layer comprising a radiation-cured, substantially thermoset material having a glassy modulus of about $3.0 \times 10^9$ or more Pascals at $0°$ C;

   d) applying a substantially transparent extensible self-supporting structural layer to said stabilizing layer, said metal layer and said structural layer being substantially coextensive; and

   e) removing said fabricating carrier from said metal layer to expose the rear side said layer of metal.

8. The method of claim 7 further characterized in at least one of the following:

   a) at least a portion of said fabricating surface of said carrier has a mirror finish; or

   b) at least a portion of said fabricating surface of said carrier has a textured surface; or

   c) said fabricating surface comprises at least two portions of differing finish.

9. The method of claim 7 further characterized in that applying said metal layer comprises at least one of sputtering, chemical deposition, or vacuum vapor coating.

10. The method of claim 7 characterized in that said method further comprises applying a mask in imagewise fashion to said front side of said stabilizing layer prior to applying said structural layer thereto such that when said fabricating carrier is removed, portions of said metal layer and said stabilizing layer are removed therewith, thereby providing non-metal-backed segments to said structural layer.

11. The method of claim 7 characterized in that said method further comprises applying one or more imaging agents to at least one of the following:
a) said front side of said metal layer prior to applying said stabilizing layer; or
b) the front surface of said structural layer.

Fig. 1

Fig. 2

Fig. 3

Fig. 4